# EUROPEAN PATENT APPLICATION

(11) **EP 2 085 458 A1**
(43) Date of publication of application: **05.08.2009**
(21) Application number: 07831189.1
(22) Date of filing: 30.10.2007
(51) Int. Cl.: C10G 25/05, B01J 20/06, C10G 29/06, H01M 8/06, C01B 3/38

(54) **DESULFURIZING AGENT FOR KEROSENE, DESULFURIZATION METHOD AND FUEL CELL SYSTEM USING THE DESULFURIZING AGENT FOR KEROSENE**

(30) Priority: 07.11.2006 JP 2006301131
(71) Applicant: Nippon Oil Corporation, Tokyo 105-8412 (JP)
(72) Inventor: SEGAWA, Atsushi, Yokohama-shi Kanagawa 231-0815 (JP); ADACHI, Michiaki, Yokohama-shi Kanagawa 231-0815 (JP); KOMAMI, Tatsusaburou, Yokohama-shi Kanagawa 231-0815 (JP); MIYAZAWA, Kazunori, Yokohama-shi Kanagawa 231-0815 (JP)
(74) Representative: Grünecker, Kinkeldey, Stockmair & Schwanhäusser Anwaltssozietät
(86) International application number: PCT/JP2007/071456
(87) International publication number: WO 2008/056621

(57) **Abstract**

The present invention provides a desulfurization agent for kerosene that can remove efficiently the sulfurs contained in kerosene under low pressure conditions and thus is excellent in an effect to inhibit carbon deposition. The desulfurization agent comprises 45 to 75 percent by mass of nickel oxide, 3 to 40 percent by mass of zinc oxide, 10 to 25 percent by mass of silica, 5 percent by mass or less of alumina and 0.1 percent by mass or less of sodium and having a BET specific surface area of 200 m²/g or greater.

## Description

### [Field of the Invention]

The present invention relates to desulfurization agents for kerosene. The present invention also relates to methods for desulfurizing kerosene containing sulfur with the agents. Further, the present invention relates to fuel cell systems provided with a desulfurizing device filled with the agents.

### [Background of the Invention]

A Fuel cell has characteristics that it is high in efficiency because it can take out electric energy directly from free energy changes caused by combustion of fuel. Further, the fuel cell does not discharge any harmful substance and thus have been extended to be used for various purposes. In particular, a solid polymer electrolyte fuel cell has characteristics that it is high in power density and compact in size and operates at low temperatures.

A fuel gas for a fuel cell generally contains hydrogen as the main component. Examples of raw materials of the fuel gas include hydrocarbons such as natural gas, LPG, naphtha, and kerosene; alcohols such as methanol and ethanol; and ethers such as dimethyl ether. A raw material containing hydrocarbon and hydrogen is reformed by treating it together with steam on a catalyst at high temperatures, partially oxidized with an oxygen-containing gas, or subjected to self-recovering type reformation in a system wherein steam and an oxygen-containing gas coexist, so as to produce hydrogen which has been basically used as a hydrogen fuel for a fuel cell.

However, elements other than hydrogen are present in the aforesaid raw materials and thus impurities of hydrocarbon origin can not be avoided from mixing in the fuel gas for a fuel cell. For example, carbon monoxide poisons a platinum-based metal used as an electrocatalyst of a fuel cell. Therefore, if carbon monoxide is present in the fuel gas, the fuel cell would not be able to obtain sufficient power-generating characteristics. In particular, a fuel cell operating at lower temperatures undergoes carbon monoxide absorption and thus is more likely to be poisoned. It is, therefore, indispensable to decrease the concentration of carbon monoxide in the fuel gas for a system using a solid polymer electrolyte fuel cell.

Conventionally, a method has been employed in which carbon monoxide in a reformed gas produced by reforming a raw material is brought into a reaction with steam to be converted to hydrogen and carbon dioxide and a slight amount of the remaining carbon monoxide is then removed by selective oxidation.

Finally, the hydrogen fuel decreased in the carbon monoxide concentration to a sufficiently lower concentration is introduced into the cathode of a fuel cell and converted to protons and electrons on the electrocatalyst. The protons thus produced transfer to the anode, through the electrolyte and react with oxygen, together with the electrons passing through the external circuit thereby producing water. When the electrons pass through the external circuit of the cell, electricity is generated.

The catalyst used for reformation of the raw material and each step for removal of carbon monoxide to produce fuel hydrogen for a fuel cell as well as the catalyst used for the electrode of the cathode are often used under such a state where precious metals and copper are reduced. Under such a state, there arises a problem that sulfur acts as an anti-catalyst and thus deteriorates the productivity of the hydrogen producing process and the catalyst activity of a fuel cell, resulting in a reduction in the efficiency thereof.

Therefore, it is contemplated that it be indispensable to remove sufficiently sulfur contained in the raw material in order to enable the catalysts used in the hydrogen production step and the electrode catalyst to exhibit their original functions.

Removal of sulfur, i.e., a desulfurization step is basically carried out at the beginning of the hydrogen production step because the sulfur content is necessarily decreased to such a level that the catalyst used in the reformation step carried out immediately thereafter exhibits its functions sufficiently. Conventionally, it has been said that the level of the sulfur content is 0.1 ppm by mass or less or 0.05 ppm by mass (50 ppb by mass) or less. However, recently, functions required for the desulfurization has become more strict and has been demanded to decrease the sulfur content to 0.02 ppm by mass (20 ppb by mass) or less.

For removing sulfur in the raw material for a fuel cell, a method has been deemed to be appropriate so far, in which method a hard desulfurized organic sulfur compound is hydrodesulfurized with a desulfurization catalyst to be converted to hydrogen sulfide which is easily removal by adsorption once, and then the hydrogen sulfide is treated with a suitable adsorbent. However, common hydrodesulfurization catalysts are used under conditions where hydrogen pressure is increased. A technical development has been advanced to use a hydrodesulfurization catalyst at atmospheric pressure or 1 MPa at the highest in the case where the catalyst is used for a fuel cell system. As the result, under the present situations, a conventional catalyst fails to meet requirements for this development.

Various studies have been carried out to develop a catalyst which can exhibit a sufficient desulfurization function even under low pressure conditions. For example, methods have been proposed wherein kerosene is desulfurized with a nickel-based desulfurization agent and then steam-reformed to produce hydrogen (for example, see Patent Documents 1 and 2 below). However, these methods have a restriction in terms of process that the temperature range capable of desulfurization is from 150 to 300°C. Proposals in which to use a copper-zinc-based catalyst have been made (for example, see Patent Documents 3 and 4 below). However, this desulfurization agent is less in carbon deposition even if used at a relatively high temperature but less in desulfurization activity, comparing with nickel. Therefore, there is a problem that it can desulfurize light hydrocarbons such as natural gas, LPG and naphtha but is insufficient to desulfurize kerosene. Alternatively, a method has been proposed wherein active carbon or chemical liquids are used to proceed with desulfurization (see Patent Document 5 below). However, it is reported that these desulfurization agents are effective in desulfurization at normal temperature when they are activated but the raw materials of the agents are limited to those that are gaseous at normal temperatures. The use of a nickel-zinc-based desulfurization agent has also been proposed (see Patent Document 6 below). However, the agent is on the basis of the premise that it is used under pressure in the coexistence of hydrogen and thus is reduced in desulfurization function at a low pressure in the non-coexistence of hydrogen because of the less nickel contents.
(1) Patent Document 1: Japanese Patent Application Laid-Open Publication No. 1-188404
(2) Patent Document 2: Japanese Patent Application Laid-Open Publication No. 1-188405
(3) Patent Document 3: Japanese Patent Application Laid-Open Publication No. 2-302302
(4) Patent Document 4: Japanese Patent Application Laid-Open Publication No. 2-302303
(5) Patent Document 5: Japanese Patent Application Laid-Open Publication No. 1-143155
(6) Patent Document 6: Japanese Patent Application Laid-Open Publication No. 2001-62297

### [Disclosure of the Invention]

As described above, the catalyst used for raw material reformation step and each step for removal of carbon monoxide carried out to produce hydrogen for a fuel cell and the catalyst used for the electrode of the cathode thereof are often used under such a state where precious metals and copper are reduced. There arises a problem that sulfur acts as an anti-catalyst and thus diminishes the catalyst activities in the hydrogen producing process and of a fuel cell under such a state, resulting in a reduction in the efficiency thereof. It is thus indispensable to remove sufficiently the sulfur contained in the raw material in order to enable the catalysts used in the hydrogen production step and the electrode catalyst to exhibit their original functions. Furthermore, it is also necessary to desulfurize hard sulfuric substances effectively under low pressure conditions. Moreover, since hydrocarbons such as kerosene have a largo carbon number such as around 12 and contain also aromatics, desulfurization in the non-coexistence of hydrogen would lead to deterioration of a desulfurization agent mainly due to disappearance of active sites thereof caused by not only sulfur accumulation but also carbon deposition, on the agent. Therefore, it is now desirous to provide a desulfurization agent that can restrain carbon deposition as much as possible.

As the results of extensive research and study of the foregoing problems, the present invention was accomplished on the basis of the finding that it was very important to inhibit a desulfurization agent from deteriorating caused by carbon deposition so as to remove sulfurs contained in kerosene efficiently and the finding of a desulfurization agent that can inhibit carbon formation. The present invention provides a method for desulfurization using the specific desulfurization agent and a fuel cell system having a desulfurization device containing the desulfurization agent.

That is, the present invention provides a desulfurization agent for kerosene, comprising 45 to 75 percent by mass of nickel oxide, 3 to 40 percent by mass of zinc oxide, 10 to 25 percent by mass of silica, 5 percent by mass or less of alumina and 0.1 percent by mass or less of sodium and having a BET specific surface area of 200 m²/g or greater. The alumina content is preferably 1 percent by mass or less.

The present invention also provides a method for desulfurizing kerosene wherein the aforesaid desulfurization agent for kerosene is used at a temperature of -50 to 400°C and a pressure of atmospheric pressure to 0.9 MPa.

Further, the present invention provides a fuel cell system provided with a desulfurization device filled with the aforesaid desulfurization agent.

### [Effects of the Invention]

The desulfurization agent of the present invention can be inhibited from deterioration caused by carbon deposition and thus can remove sulfurs contained in kerosene under low pressure conditions. Therefore, the desulfurization agent of the present invention is suitable for use in a fuel cell system.

### [Best Mode for Carrying out the Invention]

The present invention will be described below in detail.

The desulfurization agent of the present invention is basically composed of nickel oxide, zinc oxide and silica and may be produced by calcining a precursor formed by coprecipitating a component containing nickel, zinc and silica.

The content of nickel in the form of nickel oxide is necessarily from 45 to 75 percent by mass, preferably from 55 to 70 percent by mass. If the nickel content is less than 45 percent by mass or less, the resulting desulfurization agent would be lessened in functions as a desulfurization agent. If the nickel content is more than 75 percent by mass, the BET specific surface area would be smaller and the functions of the resulting desulfurization agent would be lessened.

The content of zinc in the form of zinc oxide is necessarily from 3 to 40 percent by mass, preferably from 5 to 30 percent by mass. If the zinc oxide content is less than 3 percent by mass, the resulting desulfurization agent would be less in effects of zinc that carbon deposition on the agent is inhibited by restraining the formation of bicyclic aromatics in kerosene and thus would be deteriorated by carbon deposition. If the zinc content is more than 40 percent by mass, the ratio of nickel and silica would be relatively less, resulting in lessened functions of the resulting desulfurization agent.

Silica may be at least one type selected from silica powder, silica sol, and silica gel.

The content of silica is necessarily from 10 to 25 percent by mass, preferably from 15 to 20 percent by mass. A silica content of less than 10 percent by mass is not preferable because the surface area of the resulting desulfurization agent would be small. A silica content of more than 25 percent by mass would decrease the ratio of zinc oxide and cause deterioration of functions of the resulting desulfurization agent.

The BET specific surface area of silica to be used is preferably 250 m²/g or greater, more preferably 300 m²/g or greater. There is no particular restriction on the upper limit of the BET specific surface area of silica. It is, however, usually 1000 m²/g or smaller.

The content of alumina is necessarily 5 percent by mass or less, preferably 1 percent by mass or less, more preferably 0.5 percent by mass or less. Since the presence of alumina facilitates carbon deposition of the desulfurization agent, the alumina content must be 5 percent by mass or less. A less alumina content is more preferable.

The desulfurization agent of the present invention has necessarily a BET specific surface area of 200 m²/g or greater, preferably 250 m²/g or greater. There is no particular restriction on the upper limit BET specific surface area. However, the upper limit is preferably 1000 m²/g or smaller. A BET surface area of smaller than 200 m²/g is not preferable because sufficient functions can not be attained.

When kerosene is desulfurized with a desulfurization agent, the agent, if increased in the amount of carbon deposition, rapidly deteriorates in the desulfurization function and thus can not decrease the sulfur content in the desulfurized kerosene to 20 ppm by mass or less. If a desulfurization agent contains thereon carbon in an amount of more than 5 percent by mass, it deteriorates significantly. Therefore, it is necessary to desulfurize kerosene under such conditions that the amount of carbon deposition does not exceed 5 percent by mass.

In general, kerosene contains monocyclic, bicyclic and tricyclic aromatics, which facilitate carbon deposition and deteriorate a desulfurization agent and a reforming catalyst. In particular, it is assumed that more the number of ring of aromatics is, the more a desulfurization agent deteriorates. The amount of the monocyclic aromatic decreases and the amount of the bicyclic aromatic increases during desulfurization. It is thus assumed that the amount of the bicyclic aromatic increase because monocyclic naphthene benzenes typically tetralin be dehydrogenated and become bicyclic naphthalenes. Whereupon, the eliminated hydrogen is used for desulfurization reaction and facilitates desulfurization but also assumedly facilitates deterioration caused by carbon deposition. Since a reduction nickel desulfurization agent is high in the dehydrogenation properties and thus deteriorates due to carbon deposition, it has been demanded to develop a desulfurization agent that can restrain carbon deposition.

The desulfurization agent of the present invention can be restrained from deterioration caused by carbon deposition and thus also can restrain a reforming catalyst arranged afterward a desulfurizer from deteriorating. The desulfurization agent can be used in the presence of hydrogen and in such a case is improved in durability.

Coprecipitation for forming a component containing nickel, zinc, and silica is specifically carried out by mixing silica with an aqueous solution of a nickel compound and a zinc compound and adding dropwise a base thereto or alternatively by mixing silica with an aqueous solution of a base and adding dropwise thereto an aqueous solution of a nickel compound and a zinc compound, to produce a precipitate formed from the nickel compound, the zinc compound and silica thereby preparing a precursor of the desulfurization agent.

The nickel compound and zinc compound may be chlorides, nitrates, sulfates, organic acid salts and hydroxides, of nickel and zinc. Specifically, preferable examples include nickel chloride, nickel nitrate, nickel sulfate, nickel acetate, nickel hydroxide, zinc chloride, zinc nitrate, zinc sulfate, zinc acetate, and zinc hydroxide.

The base may be an aqueous solution of ammonia, sodium carbonate, sodium hydrogen carbonate or potassium carbonate.

After the nickel compound, the zinc compound and silica are allowed to precipitate, the precipitate thus formed (precursor of the desulfurization agent) is filtered and then washed with an ion-exchange water. If washing is insufficient, chlorine, nitric acid trace, acetic acid trace, sodium, or potassium remains on a catalyst and adversely affects the functions of the desulfurization agent. Therefore, the precipitate must be washed sufficiently. If washing with an ion-exchange water is insufficient, a washing liquid may be used which is an aqueous solution of ammonia, or a base such as sodium carbonate, sodium hydrogen carbonate, or potassium carbonate. In this case, preferably the precipitated product is firstly washed with an aqueous solution of a base and then washed with an ion-exchange water. Since sodium adversely affects the functions of a desulfurization agent, it is desired to wash the precipitate until the remaining sodium amount is decreased to 0.1 percent by mass or less, preferably 0.05 percent by mass or less.

After the precipitated product is washed, it is crushed and dried. Thereafter, the dried product is calcined. If the washing after the precipitation was insufficient, washing may be carried out again after calcination. In this case, there may be used an ion-exchange water or the above-mentioned aqueous solution of a base.

There is no particular restriction on the method of drying the crushed precipitate. Examples of the method include natural drying in the air and deaeration drying under reduced pressure. Usually, the crushed precipitate is dried at a temperature of 100 to 150°C under air atmosphere for 5 to 15 hours. There is no particular restriction of the method of calcining the dried product. Usually, the dried product is calcined at a temperature of 200 to 600°C, preferably 250 to 450°C under air atmosphere for 0.1 to 10 hours, preferably 1 to 5 hours.

When the desulfurization agent prepared in the above-described method is used, it may be supplied for a reaction as it is or may be subjected to a pre-treatment that is reduction with hydrogen or the like. Conditions for the reduction are those wherein the temperature is from 150 to 500°C, preferably 250 to 400°C and the time is from 0.1 to 15 hours, preferably 2 to 10 hours.

There is no particular restriction on the shape of the desulfurization agent. The desulfurization agent produced in the form of powder may be used as it is. Alternatively, the desulfurization agent may be tablet-compressed to be a shaped product, which may be crushed and then sized to be within a suitable range. Further alternatively, the desulfurization agent may be an extruded product. For shaping, an appropriate binder may be added to the desulfurization agent. There is no particular restriction on the binder. However, since a conventional alumina binder facilitates the formation of carbon, the content of the binder in the shaped product is 5 percent by mass or less, preferably 1 percent by mass or less. Alternatively, it is possible to use a shaping agent comprising substances except for alumina, such as carbon black, silica, silica magnesia, titania, zirconia, a complex oxide thereof, or an organic matter. The upper limit amount of the binder to be added is usually 30 percent by mass or less, preferably 10 percent by mass or less. There is no particular restriction on the lower limit amount as long as the binder can exhibit its functions. The lower limit amount is usually 0.5 percent by mass or more, preferably 1 percent by mass or more.

The kerosene used as the raw material in the present invention is a kerosene containing sulfur. The sulfur content of the kerosene is from 0.1 to 30 ppm by mass, preferably 1 to 25 ppm by mass, more preferably 5 to 20 ppm by mass. The term "sulfur" used herein refers collectively to various sulfurs, inorganic sulfuric compounds, and organic sulfuric compounds that are usually contained in hydrocarbons.

For desulfurization using the desulfurization agent of the present invention, the pressure for desulfurization is preferably a low pressure within the range of atmospheric pressure to 0.9 MPa, particularly preferably of atmospheric pressure to 0.7 MPa in view of the economical efficiency and safety of a fuel cell system. There is no particular restriction on the reaction temperature as long as the sulfur content in the kerosene can be decreased. Preferably, the desulfurization agent acts effectively from low temperatures taking account of the time of starting devices. Taking account of the normal operation period, the reaction temperature is preferably from -50 to 400°C, more preferably from 0 to 300°C, particularly preferably from 100 to 260°C. If the space velocity (SV) is excessively high, desulfurization is unlikely to proceed. On the other hand, if the SV is too low, the unit becomes too large. Therefore, the SV is set to an appropriate range. When a liquid raw material is used, the SV is within the range of preferably 0.01 to 15 h⁻¹, more preferably 0.05 to 5 h⁻¹, particularly preferably 0.1 to 3 h⁻¹. The desulfurization method of the present invention has characteristics that it can desulfurize kerosene sufficiently even in the absence of hydrogen. However, a small amount of hydrogen may be introduced. The flow rate of hydrogen is for example from 0.05 to 1.0 NL per gram of kerosene.

There is no particular restriction on the mode of the desulfurization unit wherein the desulfurization method of the present invention is used. For example, a circulation type fixed-bed mode may be used. The shape of the desulfurization unit may be any known shape fitting the purpose of a process, such as cylindrical or tabular.

The fuel cell system using the desulfurization agent and desulfurization method of the present invention enables the sulfur content of the kerosene containing the above-described sulfurs to be decreased down to 20 ppm by mass or less, in the non-coexistence of hydrogen. The sulfur content is measured by an ultraviolet fluorescence method. The hydrocarbon having been desulfurized in the sulfur content to 20 ppm by mass or less undergoes a reformation step, a shift step and a carbon monoxide selective oxidation step thereby forming a hydrogen-rich gas. The hydrogen-rich gas thus formed can be used as a fuel for a fuel cell.

There is no particular restriction on the reformation step. There may be used steam-reforming wherein the raw material is reformed by treating it together with steam on a catalyst at high temperatures, partial oxidation with an oxygen-containing gas, or autothermal reforming wherein the raw material is subjected to a self-heat-recovery type reforming reaction in a system where steam and an oxygen-containing gas coexist.

There is no particular restriction on the reaction conditions for reforming. However, the reaction temperature is preferably from 200 to 1000°C, particularly preferably from 500 to 850°C. The reaction pressure is preferably from atmospheric pressure to 1 MPa, particularly preferably from atmospheric pressure to 0.2 MPa. The LHSV is preferably from 0.01 to 40 h⁻¹, particularly preferably from 0.1 to 10 h⁻¹.

A mixed gas containing carbon monoxide and hydrogen, produced as the result of the reformation step may be used as a fuel for a fuel cell if the cell is a solid oxide type fuel cell. For a fuel cell that needs removal of carbon monoxide such as a phosphorus acid type fuel cell or a solid polymer type fuel cell, the mixed gas can be suitably used to produce hydrogen for such a fuel cell.

Any known method may be used for producing hydrogen for these fuel cells. For example, hydrogen may be produced by a shift step and a carbon monoxide selective oxidation step.

The shift step is a step where carbon monoxide and water are reacted to be converted to hydrogen and carbon monoxide and, for example, the carbon monoxide content is decreased to 2 percent by volume or less, preferably 1 percent by volume or less, more preferably 0.5 percent by volume or less, using a catalyst containing a mixed oxide of iron-chrome, a mixed oxide of zinc-zinc, platinum, ruthenium, and iridium.

There is no particular restriction on the shift reaction conditions depending on the composition of the reformed gas, i.e., the raw material for this reaction. However, the reaction temperature is preferably from 120 to 500°C, particularly preferably from 150 to 450°C. The pressure is preferably from atmospheric pressure to 1 MPa, particularly preferably from atmospheric pressure to 0.2 MPa. The GHSV is preferably from 100 to 50000 h⁻¹, particularly preferably from 300 to 10000 h⁻¹. In general, the mixed gas produced through this step may be used as a fuel for a phosphorus acid fuel cell.

Whereas, for a solid polymer fuel cell, it is necessary to decrease the carbon monoxide concentration furthermore, and thus it is desired to provide a step for removing carbon monoxide. There is no particular restriction on this step. Therefore, it is possible to use various methods such as adsorption separation, hydrogen separation membrane method and a carbon monoxide selective oxidation step. The carbon monoxide selective oxidation step is particularly preferably used in view of downsizing the unit for this step and economical efficiency. In this step, the carbon monoxide concentration is decreased by adding oxygen in an amount of 0.5 to 10 times mole, preferably 0.7 to 5 times mole, more preferably 1 to 3 times mole of the number of mole of the remaining carbon monoxide using a catalyst containing iron, cobalt, nickel, ruthenium, rhodium, palladium, osmium, iridium, platinum, zinc, silver, and gold to converting selectively carbon monoxide to carbon dioxide. There is no particular restriction on the reaction conditions for this method. However, the reaction temperature is preferably from 80 to 350°C, particularly preferably from 100 to 300°C. The pressure is preferably from atmospheric pressure to 1 MPa, particularly preferably from atmospheric pressure to 0.2 MPa. The GHSV is preferably from 1000 to 50000 h⁻¹, particularly preferably from 3000 to 30000 h⁻¹. Alternatively, the carbon monoxide concentration may also be decreased by reacting the coexisting hydrogen with carbon monoxide at the same time of oxidation thereof to produce methane.

An example of the fuel cell system of the present invention will be described below with reference to Fig.

A raw material fuel (kerosene) in a fuel tank 3 flows into through a fuel pump 4 into a desulfurizer 5. Thereupon, if necessary, a hydrogen-containing gas may be added from a carbon monoxide selective oxidation reactor 11 or a low temperature shift reactor 10. The desulfurization unit 5 is filled with the desulfurization agent of the present invention. The fuel having been desulfurized in the desulfurizer 5 is mixed with water supplied through a water pump 1 from a water tank 1 and then introduced into a vaporizer 6 and fed into a reformer 7.

The reformer 7 is warmed with a warming burner 18. There may be used the offgas from the anode of a fuel cell 17 as the fuel for the warming burner 18. However, if necessary, the fuel pumped out from the fuel pump 4 may be used to replenish the burner fuel. A catalyst to be filled in the reformer 7 may be a nickel-, ruthenium-, or rhodium-containing catalyst.

The gas containing hydrogen and carbon monoxide produced in this manner is allowed to pass through a high temperature shift reactor 9, the low temperature shift reactor 10 and the carbon monoxide selective oxidation reactor 11 sequentially thereby decreasing the carbon monoxide concentration to an extent that the characteristics of a fuel cell is not adversely affected. Examples of catalysts used in these reactors include an iron-chrome-containing catalyst for the high temperature shift reactor 9, a copper-zinc-containing catalyst for the low temperature shift reactor 10, and a ruthenium-containing catalyst for the carbon monoxide selective oxidation reactor 11.

A solid polymer fuel cell 17 comprises an anode 12, a cathode 13, and a solid polymer electrolyte 14. To the anode and cathode are introduced the fuel gas containing high purity hydrogen produced by the above-described method and air supplied from an air blower, respectively. The fuel gas and air may be introduced if necessary after being subjected to an appropriate humidifying treatment (no humidifying device is shown). Thereupon, a reaction wherein the hydrogen gas becomes protons and releases electrons proceeds at the anode while a reaction wherein the oxygen gas obtains electrons and protons and thus becomes water proceeds at the cathode. In order to facilitate these reactions, platinum black and a Pt or Pt-Ru alloy catalyst with an active carbon support are used for the anode while platinum black and a Pt catalyst with an active carbon support are used for the cathode. Generally, if necessary, both of the catalysts of the anode and the cathode are formed into porous catalyst layers, together with tetrafluoroethylene, a low molecular weight polymer electrolyte membrane material, and active carbon.

Next, the porous catalyst layers are laminated on the both sides of a polymer electrolyte membrane known as product names such as Nafion (Du Pont Kabushiki Kaisha), Gore (JGI), Flemion (ASAHI GLASS CO., LTD.) or Aciplex (Asahikasei Corporation) thereby forming an MEA (Membrane Electrode Assembly). Further, the MAE is sandwiched by a pair of separators comprising a metal material, graphite, a carbon composite and having a gas feed function, a current collecting function and a draining function which is important in particular for the cathode, to assemble a fuel cell. An electric load 15 is electrically connected to the anode and the cathode.

The anode offgas is spent in the humidifying burner 18 while the cathode offgas is discharged from an exhaust 16.

### [Examples]

Hereinafter, the present invention will be described in more details by was of the following examples and comparative examples, which should not be construed as limiting the scope of the invention.

### (Example 1)

In an ion-exchange water were dissolved 272.5 g of nickel nitrate hexahydrate (commercially available agent special grade) and 54.8 g of zinc nitrate hexahydrate (commercially available agent special grade) to prepare 2500 ml of an aqueous solution which is hereinafter referred to as liquid A. To an ion-exchange water were dissolved 130.8 g of sodium carbonate (commercially available agent special grade) and 50 g of commercially available silica sol (particle diameter: about 15 nm, silica content: 15.0 g) were mixed therewith to prepare 1000 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder had a composition where NiO/ZnO/SiO₂=70 percent by mass/15 percent by mass/15 percent by mass and the remaining Na amount is 0.05 percent by mass or less.

The resulting powder was extruded to produce 6 cm³ of a 1.0 mmΦ diameter desulfurization agent (BET specific surface area: 260 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 500 hours.

### (Example 2)

In an ion-exchange water were dissolved 166.6 g of nickel acetate tetrahydrate (commercially available agent special grade) and 80.9 g of zinc acetate dihydrate (commercially available agent special grade) to prepare 3000 ml of an aqueous solution which is hereinafter referred to as liquid A. To an ion-exchange water were dissolved 121.0 g of sodium carbonate (commercially available agent special grade) and 66 g of commercially available silica sol (particle diameter: about 15 nm, silica content: 20.0 g) were mixed therewith to prepare 1200 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder had a composition where NiO/ZnO/SiO₂=50 percent by mass/30 percent by mass/20 percent by mass and the remaining Na amount was 0.05 percent by mass or less.

The resulting powder was extruded to produce 6 cm³ of a 1.0 mmΦ diameter desulfurization agent (BET specific surface area: 270 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 500 hours.

### (Example 3)

In an ion-exchange water were dissolved 233.6 g of nickel nitrate hexahydrate (commercially available agent special grade) and 54.8 g of zinc nitrate hexahydrate (commercially available agent special grade) to prepare 2500 ml of an aqueous solution which is hereinafter referred to as liquid A. To an ion-exchange water were dissolved 115.1 g of sodium carbonate (commercially available agent special grade) and 83 g of commercially available silica sol (particle diameter: about 15 nm, silica content: 25.0 g) were mixed therewith to prepare 1200 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder has a composition where NiO/ZnO/SiO₂=60 percent by mass/15 percent by mass/25 percent by mass and the remaining Na amount was 0.05 percent by mass or less.

To the resulting powder were added 3 percent by mass of a commercially available alumina powder as a binder. The mixture was kneaded and extruded to produce 6 cm³ of a 1.0 mmΦ diameter desulfurization agent (BET specific surface area: 250 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexisence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 500 hours.

### (Comparative Example 1)

In an ion-exchange water were dissolved 136.3 g of nickel nitrate hexahydrate (commercially available agent special grade) and 182.8 g of zinc nitrate hexahydrate (commercially available agent special grade) to prepare 2800 ml of an aqueous solution which is hereinafter referred to as liquid A. To an ion-exchange water were dissolved 126.3 g of sodium carbonate (commercially available agent special grade) and 50 g of commercially available silica sol (particle diameter: about 15 nm, silica content: 15.0 g) were mixed therewith to prepare 1200 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder had a composition where NiO/ZnO/SiO₂=35 percent by mass/50 percent by mass/15 percent by mass and the remaining Na amount was 0.05 percent by mass or less.

The resulting powder was extruded to produce 6 cm³ of a 1.0 mmΦ diameter desulfurization agent (BET specific surface area: 250 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 set forth the sulfur content of the kerosene and the amount of the carbon accumulated on the desulfurization agent sampled out from the system after the lapse of 400 hours.

### (Comparative Example 2)

In an ion-exchange water were dissolved 233.2 g of nickel acetate tetrahydrate (commercially available agent special grade) and 40.5g of zinc acetate dihydrate (commercially available agent special grade) to prepare 3000 ml of an aqueous solution which is hereinafter referred to as liquid A. To an ion-exchange water were dissolved 130.8 g of sodium carbonate (commercially available agent special grade) and 15.0 g of commercially available γ-alumina (BET specific surface area: 230 m²/g) were mixed therewith to prepare 1200 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 50 g of calcined powder. The calcined powder had a composition where NiO/ZnO/Al₂O₃=70 percent by mass/15 percent by mass/15 percent by mass and the remaining Na amount was 0.05 percent by mass or less.

The resulting powder was extruded to produce 6 cm³ of a 1.0 mmΦ diameter desulfurization agent (BET specific surface area: 190 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 250 hours.

### (Comparative Example 3)

In an ion-exchange water were dissolved 136.3 g of nickel acetate tetrahydrate (commercially available agent special grade) to prepare 1400 ml of an aqueous solution which is hereinafter referred to as liquid A. To an ion-exchange water were dissolved 54. 6 g of sodium carbonate (commercially available agent special grade) and 50 g of commercially available silica sol (particle diameter: about 15 nm, silica content: 15.0 g) were mixed therewith to prepare 600 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 50 g of calcined powder. The calcined powder had a composition where NiO/SiO₂=70 percent by mass/30 percent by mass and the remaining Na amount was 0.05 percent by mass or less.

The resulting powder was extruded to produce 6 cm³ of a 1.0 mmΦ diameter desulfurization agent (BET specific surface area: 300 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 200 hours.

### (Comparative Example 4)

In an ion-exchange water were dissolved 233.6 g of nickel nitrate hexahydrate (commercially available agent special grade) and 54.8 g of zinc nitrate hexahydrate (commercially available agent special grade) to prepare 2500 ml of an aqueous solution which is hereinafter referred to as liquid A. To an ion-exchange water were dissolved 115.1 g of sodium carbonate (commercially available agent special grade) and 83 g of commercially available silica sol (particle diameter: about 15 nm, silica content: 25.0 g) were mixed therewith to prepare 1200 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder had a composition where NiO/ZnO/SiO₂=60 percent by mass/15 percent by mass/25 percent by mass and the remaining Na amount was 0.05 percent by mass or less.

To the resulting powder were added 7 percent by mass of a commercially available alumina powder as a binder. The mixture was kneaded and extruded to produce 6 cm³ of a 1.0 mmΦ diameter desulfurization agent (BET specific surface area: 240 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 400 hours.

### (Comparative Example 5)

In an ion-exchange water were dissolved 272.5 g of nickel nitrate hexahydrate (commercially available agent special grade) and 54.8 g of zinc nitrate hexahydrate (commercially available agent special grade) to prepare 2500 ml of an aqueous solution which is hereinafter referred to as liquid A. To an ion-exchange water were dissolved 130.8 g of sodium carbonate (commercially available agent special grade) and 50 g of commercially available silica sol (particle diameter: about 15 nm, silica content: 15.0 g) were mixed therewith to prepare 1000 ml of a solution which is hereinafter referred to as liquid B. Liquids A and B were mixed at a temperature of 40°C, while being stirred to form precipitate. After the precipitate was washed with an ion-exchange water, the resulting cake was crushed and then dried at a temperature of 120°C for 10 hours and calcined at a temperature of 360°C for 4 hours thereby producing 100 g of calcined powder. The calcined powder had a composition where NiO/ZnO/SiO₂=70 percent by mass/15 percent by mass/15 percent by mass and the remaining Na amount was 0.2 percent by mass or less.

The resulting powder was extruded to produce 6 cm³ of a 1.0 mmΦ diameter desulfurization agent (BET specific surface area: 260 m²/g), which was then filled in a circulation type reaction pipe with a diameter of 1.27 cm and reduced in steam at a temperature of 350°C for 3 hours. The resulting desulfurization agent was subjected to a desulfurization test wherein JIS No. 1 kerosene (sulfur content: 7 ppm by mass, monocyclic aromatic content: 19.0 percent by volume, bicyclic aromatic content: 0.4 percent by volume, tricyclic aromatic content: 0.1 percent by volume) was desulfurized in the non-coexistence of hydrogen at a reaction temperature of 220°C, a reaction pressure of 0.3 MPa (gauge pressure) and an LHSV of 4.0h⁻¹. Table 1 sets forth the sulfur content of the kerosene and the amount of the carbon accumulated on the desulfurization agent sampled out from the system after the lapse of 400 hours.

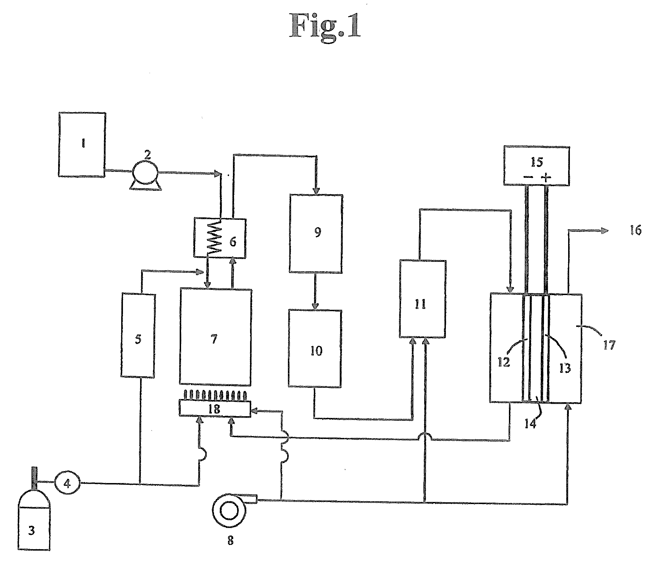

In the fuel cell system shown in Fig. 1, the desulfurization agent produced in Example 1 was filled in the desulfurizer 5, and a power generation test was carried out using JIS No. 1 kerosene (sulfur content: 27 ppm by mass) as fuel. During 200 hour operation, the desulfurizer worked normally, and no reduction in activity of the desulfurization agent was recognized. The desulfurization conditions were those wherein the temperature was 220°C, the pressure was 0.25 MPa (gauge pressure), no hydrogen was circulated and the LHSV was 0.5 h⁻¹.

Thereupon, the steam reformation was carried out under the conditions where S/C=3, the temperature was 700°C and the LHSV was 1 h⁻¹ using a ruthenium catalyst. The shift step (at the reactor 10) was carried out under the conditions where the temperature was 200°C, and the GHSV was 2000 h⁻¹ using a copper-zinc catalyst. The carbon monoxide selective oxidation step (at the reactor 11) was carried out under the conditions where O₂/CO=3, the temperature of 150°C and the GHSV was 5000 h⁻¹ using a ruthenium catalyst. The fuel cell worked normally and the electric load 14 was operated favorably.

### Table 1

**Table 1**

| | Composition of Desulfurization Agent (weight ratio) | BET Specific Surface Area m²/g | Elapsed Time Sulfur Concentration of Kerosene After Desulfurization | Amount of Accumulated Carbon on Sampled-Out Desulfurizaton Agent | Binder Type Amout | Remaining Na Amount | Evaluation |
|---|---|---|---|---|---|---|---|
| Example 1 | NiO/ZnO/SiO₂ (70/15/15) | 260 | 500h less than 20 mass ppb | 3 mass % | - | 0.05 or less mass % | good |
| Example 2 | NiO/ZnO/SiO₂ (50/30/20) | 270 | 500h less than 20 mass ppb | 4 mass % | - | 0.05 or less mass % | good |
| Example 3 | NiO/ZnO/SiO₂ (60/15/25) | 250 | 500h less than 20 mass ppb | 5 mass % | Alumina 3 mass % | 0.05 or less mass % | good |
| Comparative Example 1 | NiO/ZnO/SiO₂ (35/50/15) | 250 | 400h 30 mass ppb | 6 mass % | - | 0.05 or less mass % | poor |
| Comparative Example 2 | NiO/ZnO/Al₂O₃ (70/15/15) | 190 | 250h 100 mass ppb | 7 mass % | - | 0.05 or less mass % | poor |
| Comparative Example 3 | NiO/SiO₂ (70/30) | 300 | 200h 400 mass ppb | 10 mass % | - | 0.05 or less mass % | poor |
| Comparative Example 4 | NiO/ZnO/SiO₂ (60/15/25) | 240 | 400h 50 mass ppb | 6 mass % | Alumina 7 mass % | 0.05 or less mass% | poor |
| Comparative Example 5 | NiO/ZnO/SiO₂ (70/15/15) | 260 | 400h 40 mass ppb | 3 mass % | - | 0. 2 mass % | poor |

### [Brief Description of the Drawing]

Fig. 1 is a schematic view illustrating an example of the fuel cell system of the present invention.

### (Description of Numerals)

- 1: water tank
- 2: water pump
- 3: fuel tank
- 4: fuel pump
- 5: desulfurizer
- 6: vaporizer
- 7: reformer
- 8: air blower
- 9: high temperature shift reactor
- 10: low temperature shift reactor
- 11: carbon monoxide selective oxidization reactor
- 12: anode
- 13: cathode
- 14: solid polymer electrolyte
- 15: electric load
- 16: exhaust
- 17: solid polymer fuel cell
- 18: warming burner

### [Applicability in the Industry]

The desulfurization agent of the present invention can be restrained from undergoing deterioration caused by carbon deposition and thus can eliminate sulfurs contained in kerosene, under low pressure conditions. Therefore, the desulfurization agent is suitably used in a fuel cell system.

## Claims

1. A desulfurization agent for kerosene, comprising 45 to 75 percent by mass of nickel oxide, 3 to 40 percent by mass of zinc oxide, 10 to 25 percent by mass of silica, 5 percent by mass or less of alumina and 0.1 percent by mass or less of sodium and having a BET specific surface area of 200 m²/g or greater.

2. The desulfurization agent for kerosene according to claim 1, wherein the alumina content is 1 percent by mass or less.

3. A method for desulfurizing kerosene wherein the desulfurization agent for kerosene according to claim 1 or 2 is used at a temperature of -50 to 400°C and a pressure of atmospheric pressure to 0.9 MPa.

4. A fuel cell system comprising a desulfurization device filled with the desulfurization agent according to claim 1 or 2.
